# EUROPEAN PATENT APPLICATION

(11) **EP 2 620 881 A2**
(43) Date of publication of application: **31.07.2013**
(21) Application number: 13152709.5
(22) Date of filing: 25.01.2013
(51) Int. Cl.: G06F 17/30

(54) **System and method for searching for a space of interest**

(30) Priority: 26.01.2012 US 201261591212 P
(71) Applicant: HYUNDAI MOTOR COMPANY, Seoul 137-938 (KR)
(72) Inventor: Park, Cheol Woo, 138-751 Seoul (KR); Kim, Hoi Hong, 305-750 Daejeon (KR)
(74) Representative: Isarpatent

(57) **Abstract**

A space of interest (SOI) search system which manages SOI information in which a geographical space is determined to be a predetermined region but not a point. In more detail, the corresponding SOI part is stored to be related to place-name IDs such that the stored result can be configured and managed in the form of a dictionary. The SOI search system includes an SOI dictionary unit for matching an SOI identifier (ID) to one or more place-name identifiers (IDs) based on a geographical location and setting pieces of public information on the SOI ID and an SOI relationship object, an SOI storage unit for storing the matched place-name ID and SOI information so that they are associated with each other, and a public information storage unit for storing the pieces of public information on the SOI object and the SOI relationship object.

## Description

### FIELD OF THE INVENTION

Embodiments of the present invention relate to an apparatus and method for storing and searching for a space of interest (SOI), and more particularly to a system and method for searching a database for storing a variety of SOIs, for an SOI.

### BACKGROUND OF THE INVENTION

Generally, a point of interest (POI) location information is represented by X and Y coordinates. In more detail, when searching for a specific POI through a current Internet-based location information search service, X and Y coordinates (hereinafter referred to as XY coordinates) of the corresponding POI are displayed as a single point or dot on a predetermined-sized map.

In the case of managing data having been matched on the basis of X and Y coordinates, multiple location-based data pieces are matched to the same location, such that a plurality of coordinate information pieces can be generated or multiple data pieces indicating the same content can be represented at the same coordinates, resulting in the occurrence of unexpected confusion in the search result.

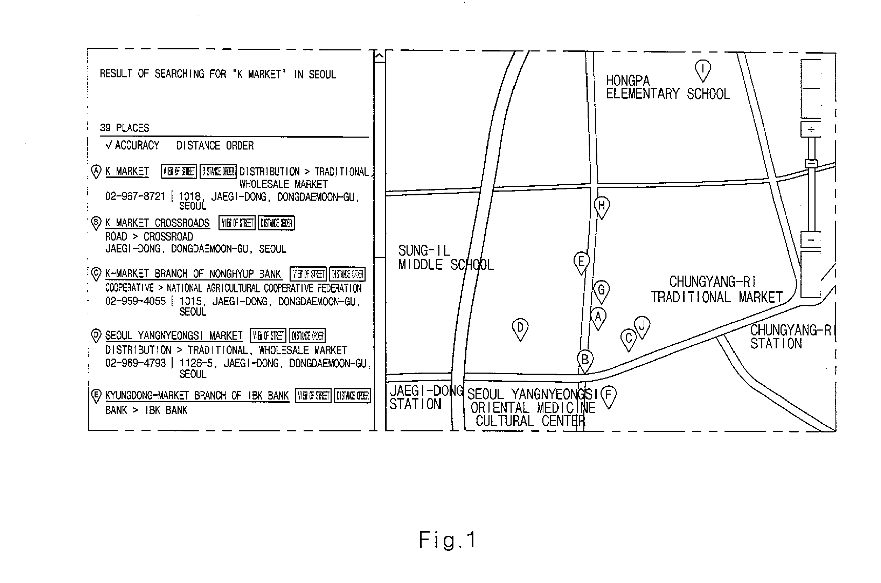

Referring to FIG. 1, if a user who uses a conventional system inputs a desired place, "K market", as a keyword, not a more accurate place denoted by "K market," but the entirety of a predetermined area including the corresponding place "K market" is recognized as the specific position "K market". Due to the above-mentioned problem, the conventional location-based service is unable to provide the user with a more preferable search result having higher accuracy.

### BRIEF SUMMARY OF THE INVENTION

### [THE SUMMARY WILL BE UPDATED TO TRACK THE CLAIMS BEFORE FILING.]

Various embodiments of the present invention are directed to providing a system and method for searching for a space of interest (SOI) that substantially obviates one or more problems due to limitations and disadvantages of the related art. A space of interest (SOI) refers to a collection of data about a space of people's interest or use. An SOI is generally made up of a point, line and/or plane and has a unique identifying data.

It is an object of the present invention to provide an SOI search system and method for providing a user with a variety of user-desired location-based information.

It is another object of the present invention to provide an SOI search system and method which constructs location-based data on the basis of a predetermined region or path so as to increase the utility of location-based data, thereby providing a user with an optimum search result.

It is yet another object of the present invention to provide an SOI search system and method, which are capable of constructing an SOI dictionary in which a variety of pieces of public information on SOI objects have been set by setting public information in each management unit according to ownership to an SOI object and obtaining an adaptive search result based on the set public information when making a search by using the SOI dictionary.

In accordance with an aspect of the present invention, an SOI search system includes an SOI dictionary unit for matching at least one place-name identifier (ID) based on a geographical location to an SOI identifier (SOI ID) and an SOI storage unit for storing the matched SOI ID to be related to SOI information.

The SOI information can include coordinates of a center location of an SOI part, information on the shape of the SOI part, and coordinates of an outline of the SOI part. The SOI ID and the SOI information can be managed by each user.

The SOI search system can further include an SOI information generator for registering or correcting the SOI information.

The SOI search system can further include an SOI search unit for extracting the SOI ID from the SOI dictionary unit on the basis of a keyword received from an external part and receiving the SOI information from the SOI storage unit on the basis of the extracted SOI ID and a display unit for displaying the received SOI information.

In accordance with another aspect of the present invention, an SOI search system includes an SOI search unit configured to receiver at least one of a keyword input and a space selection input from a client terminal, an SOI dictionary unit configured to match one or more SOI objects to one or more place-name IDs based on a geographical location and to set public information on each of the one or more SOI objects and public information on each of SOI relationship objects indicative of relationships between the one or more SOI objects depending on ownership to the one or more SOI objects, an SOI storage unit configured to store the matched place-name IDs and SOI information objects, and a public information storage unit configured to store the pieces of public information set to the one or more SOI objects and the SOI relationship objects, wherein the SOI dictionary unit obtains a search result, corresponding to the input received from the SOI search unit, based on the matching information stored in the SOI storage unit and the pieces of public information stored in the public information storage unit.

Since public information each of the SOI object and the SOI relationship object is set as described above, there are advantages in that an SOI dictionary into which a public intention of an SOI owner has been incorporated can be constructed and a variety of search results can be derived based on each piece of set SOI public information.

The public information may include public attribute information and public attribute management unit information, the public attribute information may include one of public and private attributes, and only an SOI object or SOI relationship object having the public attribute information set to be public may be retrieved as the search result.

The public attribute management unit information may include at least one of a theme, a category, a user group, and a season, and an attribute value of the public attribute information may be stored in each public attribute management unit.

Furthermore, the SOI dictionary unit may obtain the search result by filtering the SOI objects or the SOI relationship objects based on the public information on the one or more SOI objects and the public information on the SOI relationship objects and deciding an SOI object and SOI relationship objects matched to the received input, from among the filtered SOI objects and the SOI relationship objects and use an SOI search ID when deciding the SOI ID object matched to the received input.

In accordance with yet another aspect of the present invention, an SOI search method includes an SOI storing step of matching one or more SOI objects to one or more place-name identifiers (IDs) based on a geographical location and storing the matched SOI objects and place-name IDs, a public information setting step of setting public information each of the one or more SOI objects and public information on each of SOI relationship objects indicative of relationships between and the one or more SOI objects depending on ownership to the one or more SOI objects, an SOI search input step of receiving at least one of a keyword input and a space selection input from a client terminal, and a step of obtaining a search result corresponding to the received input based on information on the matched SOI objects and place-name IDs stored in the SOI storing step and the pieces of public information set in the public information setting step.

### BRIEF DESCRIPTION OF THE DRAWINGS

FIG. 1 is a conceptual diagram illustrating an exemplary method for providing a conventional location-based service.
FIG. 2 is a conceptual diagram illustrating a method for providing an SOI search result according to one embodiment of the present invention.
FIG. 3 is a block diagram illustrating an SOI search system according to one embodiment of the present invention.
FIG. 4 is a conceptual diagram illustrating a method for extracting SOI information according to the matching result of a place-name ID and an SOI identifier (ID) according to one embodiment of the present invention.
FIG. 5 is a conceptual diagram illustrating a method for extracting SOI information depending upon a place-name ID and an SOI ID according to one embodiment of the present invention.
FIG. 6 is a block diagram illustrating an SOI search system according to one embodiment of the present invention.
FIG. 7 is a block diagram showing an SOI system according to another embodiment of the present invention.
FIG. 8 is diagram showing an example of an SOI dictionary constructed by the SOI search system according to an embodiment of the present invention.
FIG. 9 is a block diagram showing an example of an SOI search system according to an another embodiment of the present invention.

The same reference numerals in a plurality of figures denote the same element.

### DESCRIPTION OF EMBODIMENTS

Reference will now be made in detail to the embodiments of the present invention, examples of which are illustrated in the accompanying drawings. Wherever possible, the same reference numbers will be used throughout the drawings to refer to the same or like parts. It is to be understood that the detailed description which will be disclosed along with the accompanying drawings is intended to describe the exemplary embodiments of the present invention and is not intended to describe a unique embodiment through which the present invention can be carried out. Hereinafter, the detailed description includes detailed matters to provide full understanding of the present invention. However, it will be apparent to those skilled in the art that the present invention can be carried out without such detailed matters. In some instances, well-known structures and devices are omitted in order to avoid obscuring the concepts of the present invention and the important functions of the structures and devices are shown in block diagram form.

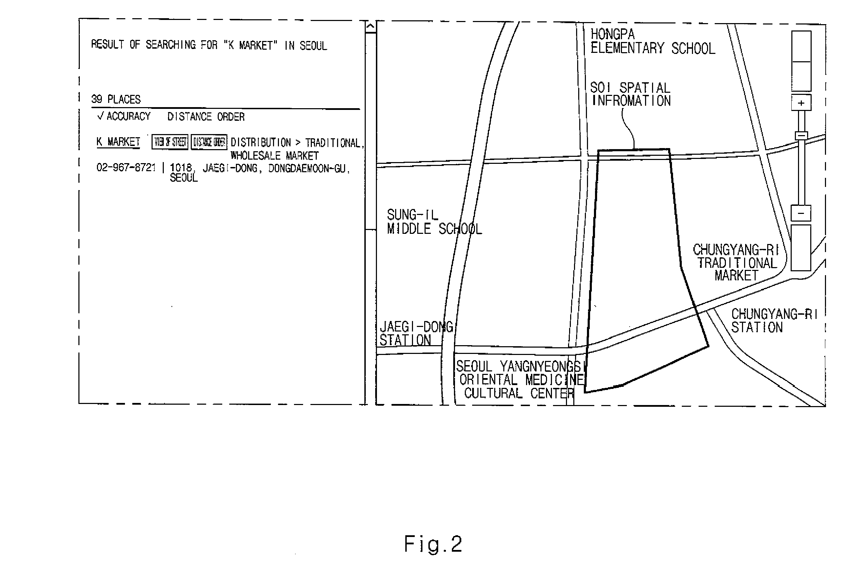

FIG. 2 is a conceptual diagram illustrating a method for providing a space of interest (SOI) search result according to one embodiment of the present invention.

Referring to FIG. 2, if a user inputs a keyword "K market" to search for a desired place, "K market", the SOI provides two-dimensional (2D) spatial information instead of displaying a point indicating XY coordinates. In accordance with one embodiment of the present invention, the SOI information can include information of individual floors of a two-dimensional (2D) building. That is, the SOI information can include 3D spatial information including vertical relationship structure information therein.

The SOI information can display location information such as X and Y coordinates, relationship structure information including SOI relationship structure information, combining of SOI information, and information regarding a predetermined space located on a map. The SOI can further include shape information (for example, a point, a line, region information, building information, etc.) in the location information.

The SOI information can be stored in association with a predetermined SOI identifier (SOI ID). In accordance with one embodiment of the present invention, the SOI information can be stored in association with one or more SOI IDs. When searching for an SOI, the SOI ID is matched to the corresponding keyword, such that SOI information can be provided to the user.

If multiple pieces of information are input to a single coordinate, a plurality of pieces of point of interest (POI) information can be generated. If multiple pieces of information are input to an SOI indicating the same region, the input pieces of information can be managed as one piece of SOI information. In this case, one or more SOI IDs can be assigned to a single piece of SOI information.

In accordance with one embodiment of the present invention, although SOI information can include single information, the SOI information can be extended to a horizontal relationship structure or vertical relationship structure. The SOIs having a horizontal relationship structure can be linked to each other, or can be provided as the result of a single SOI.

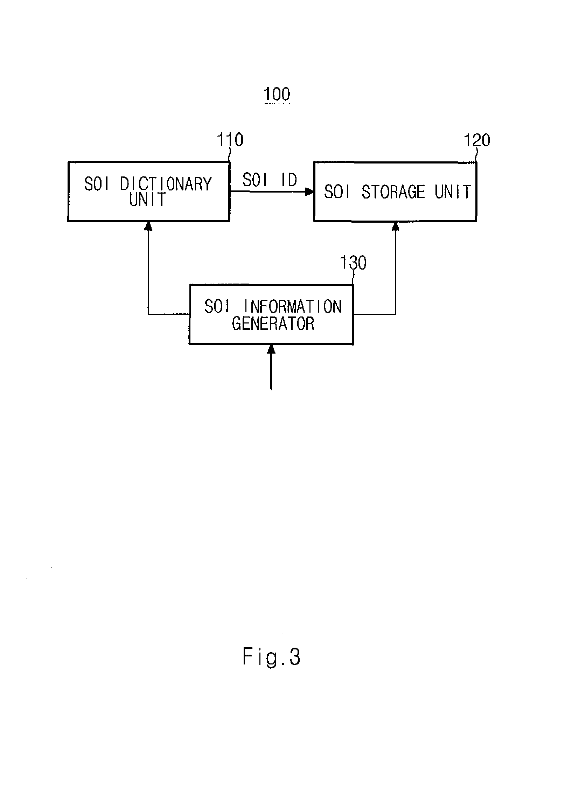

FIG. 3 is a block diagram illustrating an SOI search system according to one embodiment of the present invention.

Referring to FIG. 3, the SOI search system 100 can include an SOI dictionary unit 110, an SOI storage unit 120, and an SOI information generator 130.

The SOI dictionary unit 110 matches a place-name ID based on a geographical location to an SOI ID. For example, the place-name ID can be set to an address name decided by an address system. In another example, the place-name ID can be set to a geographical name contained in a general user idea, for example, "Kevin market", "Matthew street", "Walter road", "Kenneth market", etc. In addition, the SOI dictionary unit 110 can collect synonyms instead of such geographical names, store the collected synonyms as individual place-name IDs, and match an appropriate SOI ID to the stored place-name ID as necessary.

Therefore, the SOI search system 100 according to one embodiment of the present invention assigns not only a place name based on the address system but also a common notional place-name widely used by a general user to a place-name ID, and matches the SOI ID to the corresponding place-name ID, such that it can search for an SOI as if it were a dictionary.

The SOI storage unit 120 stores the SOI ID in association with SOI information. In accordance with one embodiment, one or more SOI IDs can also be associated with such SOI information. In addition, space IDs (i.e., SOI IDs) for hierarchically managing SOI information (for example, higher SOI ID, lower SOI ID, associated SOI ID, etc.) can be assigned to the SOI information.

For example, the SOI information can be assigned a single SOI ID. However, assuming that constant pieces of SOI information are horizontally associated with each other, the associated pieces of SOI information can be simultaneously searched for, such that associated SOI IDs are assigned to the associated pieces of SOI information to be identified from each other. In addition, since specific SOI information can be stored as lower SOI information of another piece of SOI information, a higher SOI ID and a lower SOI ID are assigned to the specific SOI information in such a manner that the SOI information can be managed by the higher and lower SOI IDs.

The SOI information generator 130 can register new SOI information. If SOI information is changed, the SOI information generator 130 stores the changed SOI information in the SOI storage unit 120. Registration or change of the SOI information can be achieved through external input, or the SOI information can be changed through internal correction of the SOI search system.

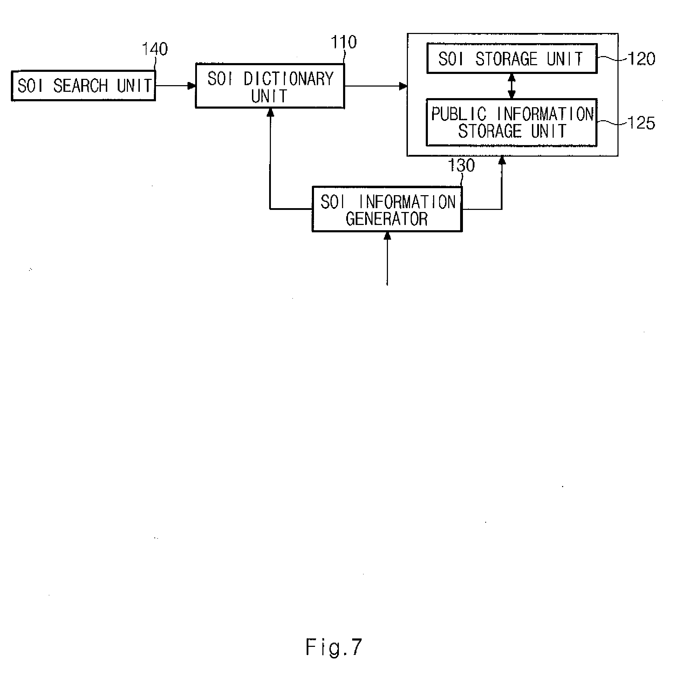

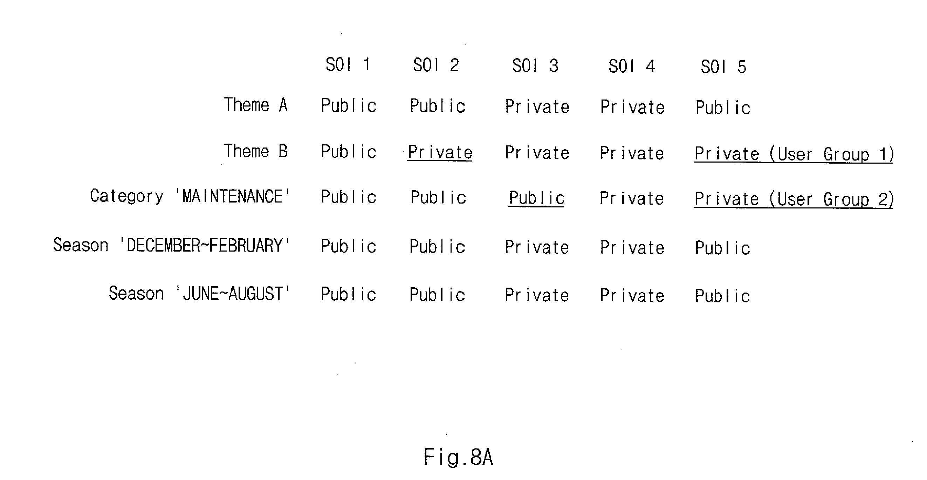

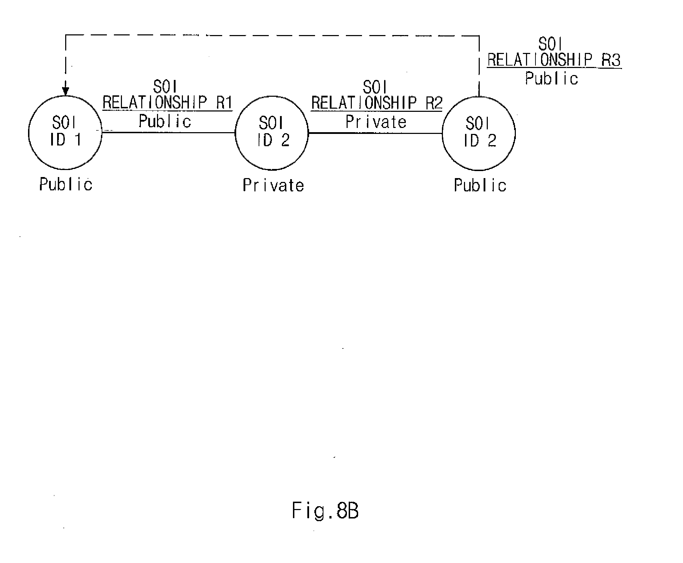

For example, an expert, a regional expert, and an owner of a corresponding part can change a region established by SOI information to another region, or can change current information to other information. The expert, the regional expert, etc. can provide the SOI information generator 130 with a variety of information, for example, information indicating that the designated SOI information region is different from an actual region, place-name IDs of commonly-accepted spaces of general users, etc. As a result, the SOI information generator 130 can correct or generate SOI information on the basis of the received information, or can store the corrected or generated SOI information in the SOI storage unit 120. In addition, a new place-name ID can be provided to the SOI dictionary unit 110. Furthermore, whether information on a relationship between each SOI object and other SOI objects will be public or not can be set depending on ownership to an SOI object. This is described in detail with reference to FIGS. 7 and 8.

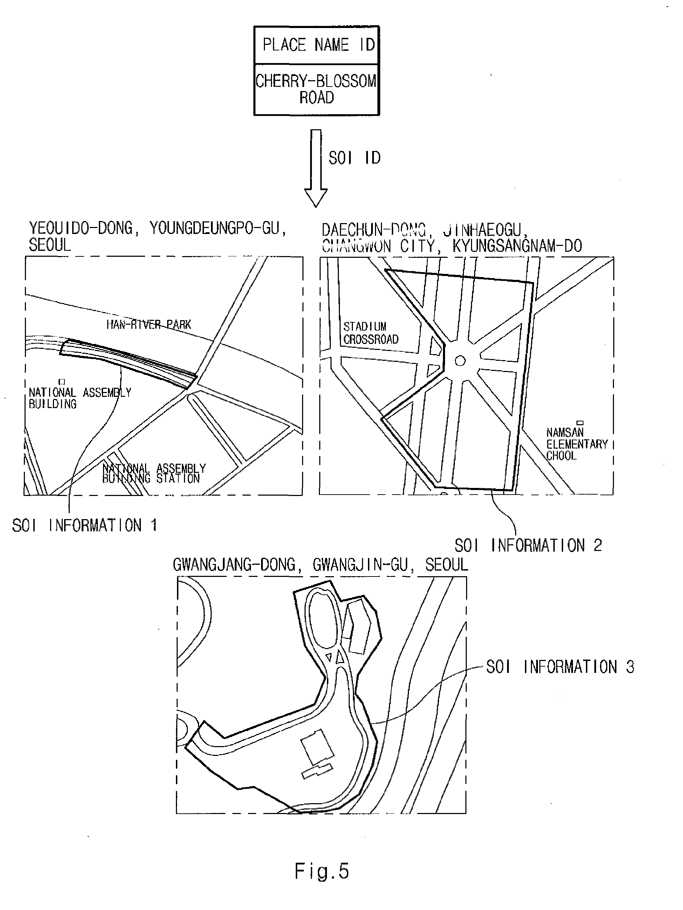

In addition, a plurality of SOI IDs can be matched to one place-name ID according to one embodiment of the present invention, and a detailed description thereof will hereinafter be described with reference to FIG. 5.

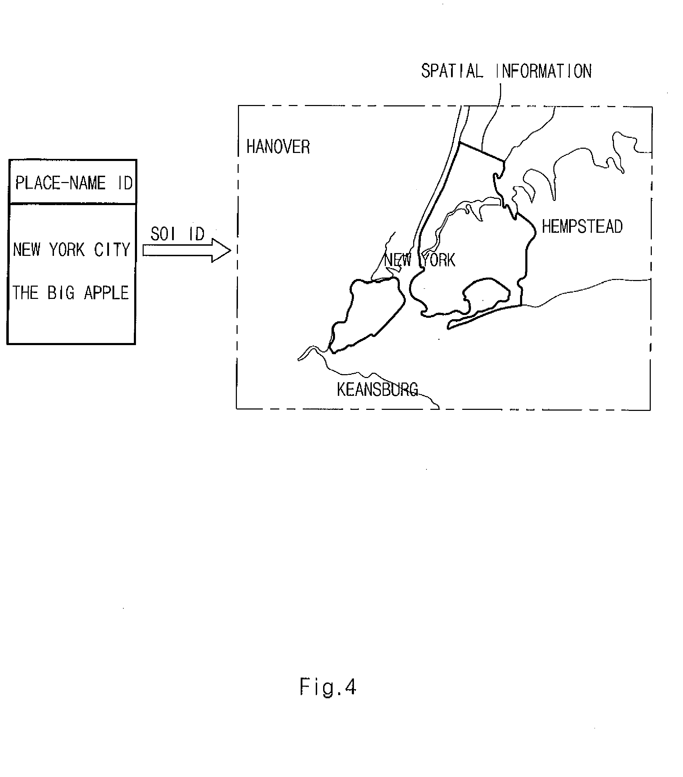

FIG. 4 is a conceptual diagram illustrating a method for extracting SOI information according to the matching result of a place-name ID and an SOI identifier (ID) according to one embodiment of the present invention.

Referring to FIG. 4, various place-name IDs (for example, "New York City" and "The Big Apple") are matched to SOI information through the SOI ID. The place name "New York City" is a commonly-used place name recognized by the address system. However, the place name "New York City" is conceptually identical to a synonym "The Big Apple" not officially recognized by the address system, and corresponds to a geographical name commonly accepted by general users. Different place names, "New York City" and "The Big Apple", can be managed by the SOI dictionary unit 110 and can be assigned the same SOI ID.

The SOI storage unit 120 stores an SOI ID and SOI information to be related to each other. Thus, if the SOI ID is provided through the SOI dictionary unit 110, the SOI storage unit 120 can provide the SOI information in response to the received SOI ID.

FIG. 5 is a conceptual diagram illustrating a method for extracting SOI information depending upon a place-name ID and an SOI ID according to one embodiment of the present invention.

Referring to FIG. 5, multiple pieces of SOI information correspond to a single place-name ID "Cherry-blossom road". In accordance with one embodiment of the present invention, multiple SOI IDs are matched to the place name "Cherry-blossom road" of the SOI dictionary unit 110, such that multiple pieces of SOI information can be provided from the SOI storage unit 120 in response to the SOI ID.

The SOI dictionary unit 110 thus matches multiple place-name IDs to multiple SOI IDs, and stores the matched result. In addition, the SOI dictionary unit 110 provides ID information for each user such that it can provide different SOI dictionary units to individual users. If a place-name ID and an SOI ID are differently matched to each other by each user, the SOI dictionary unit 110 provides optimum SOI information to each user, and need not store a place-name ID not used by the corresponding user, such that the storage space is largely reduced and the entire operation speed of the search system is improved.

An SOI ID matched to a place-name ID and associated SOI information thereof can have priority decided on the basis of the location of a current user. In accordance with one embodiment of the present invention, SOI information closest to the user location can have highest priority.

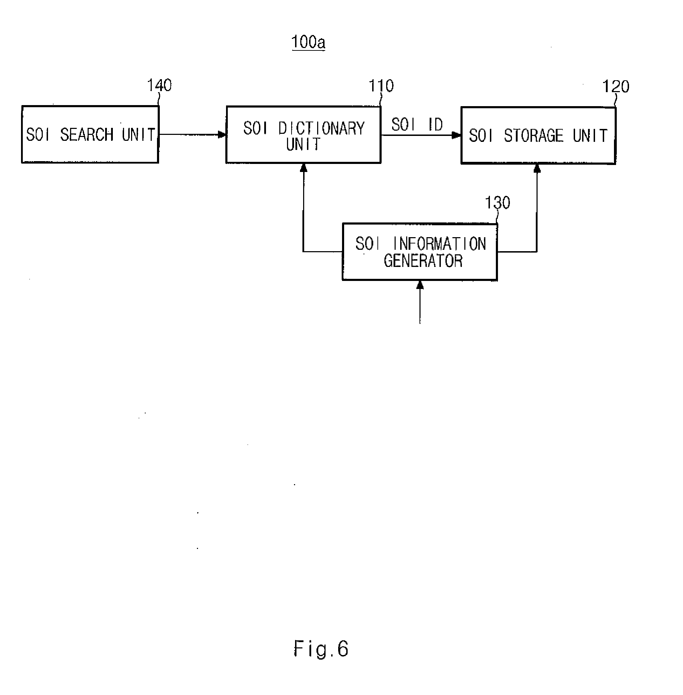

FIG. 6 is a block diagram illustrating an SOI search system according to one embodiment of the present invention.

Compared with the SOI search system 100 shown in FIG. 3, the SOI search system 100a shown in FIG. 6 can further include an SOI search unit 140. In the following description, the same reference numbers as in FIG. 3 will be used throughout the drawings to refer to the same or like parts, and thus a detailed description thereof will be omitted herein for convenience of description.

The SOI search unit 140 provides a keyword received from an external part to the SOI dictionary unit 110. In response to the input keyword, the SOI dictionary unit 110 can provide an SOI ID matched to a place-name ID to the SOI storage unit 120. The SOI storage unit 120 can transmit SOI information associated with an SOI ID to the SOI search unit 140.

In accordance with one embodiment of the present invention, the SOI search unit 140 changes a keyword corresponding to a place-name ID stored in the SOI dictionary unit 110, and provides the changed result to the SOI dictionary unit 110. In accordance with another embodiment of the present invention, the SOI dictionary unit 110 compares a place-name ID with a keyword on the basis of the keyword received from the SOI search unit 140, and extracts an SOI ID according to the comparison result.

The SOI search unit 140 can provide a user with SOI information on the basis of the received SOI information. Although not shown in FIG. 6, the SOI search system 100a can further include a display unit, such that it can provide a user with the searched SOI information through the display unit.

The display unit can be any of well-known elements, for example, a Liquid Crystal Display (LCD), a Light Emitting Diode (LED), etc. If necessary, the display unit can also be implemented as a touch screen, etc.

FIG. 7 is a block diagram showing an SOI system according to another embodiment of the present invention. The SOI search system according to the present embodiment further includes a public information storage unit 125 together with the SOI search unit 140, the SOI dictionary unit 110, the SOI information generator 130, and the SOI storage unit 120 described with reference to FIG. 6. That is, there can be provided a system further including the public information storage unit 125 for storing SOI objects and public information on a relationship between the SOI objects in addition to the SOI storage unit 120 for storing the SOI objects mapped to place-name IDs.

First, the generation of an SOI dictionary using the public information storage unit 125 is described. As described above, the SOI dictionary unit 110 can match an SOI ID to a place-name ID based on a geographical location and store the matched SOI ID and place-name ID in the SOI storage unit 120. That is, the SOI storage unit 120 can store an SOI ID associated with SOI information. In some embodiments, one or more SOI IDs can be associated with a piece of SOI information. Furthermore, space IDs for hierarchically managing SOI information, such as a higher SOI ID, a lower SOI ID, and an associated SOI ID, may be assigned to the SOI information.

In accordance with the present embodiment, the SOI dictionary unit 110 can set public information to an SOI ID matched to a place-name ID. The setting of public information can be set by an owner who has ownership to each of SOI objects that are represented by SOI IDs. The ownership can be assigned to a person who actually owns an SOI object, that is, a space object, a person who has set the space as the SOI object, or both. A right to set the SOI object in a public state can be assigned to an owner who owns the ownership.

Public information includes information on whether an SOI object is public or not and/or on a public range of the SOI object. In the present embodiment, public information can include public attribute information and public attribute management unit information. The public attribute information refers to a public or private attribute. The public attribute management unit information is a class generated so as to efficiently manage the public attribute of an SOI object, and the public attribute management unit information can include a theme, a category, a user group, a season, etc. The public attribute information can set to each public attribute management unit, and thus an SOI object can have the same or different pierces of public attribute information in a public attribute management unit. Since one SOI object has a variety of public attributes according to a variety of classes as described above, a search result can be different depending on public information. This public setting is performed by an owner. An owner can particularly designate whether or not a space owned or generated by him will be outputted as a search result in relation to what search and allows a searcher to view only a public retrieved result.

Furthermore, the SOI dictionary unit 110 can set whether a 'relationship' between SOI objects that couples one or more SOI objects will be public or not and a range of a public relationship (i.e., public information) in addition to the SOI objects. As described above, higher or lower SOI objects can be associated with each other in a horizontal or vertical structure, and each of the higher or lower SOI objects can have a plurality of relationships according to a predetermined criterion. In accordance with one embodiment of the present invention, since public information can be set to a relationship between the SOI objects (i.e., each SOI relationship object), some or all of relationships between coupled SOI objects may not be exposed when a search is made. Public information on this SOI relationship object can also include public attribute information in each public attribute management unit, like the information on whether an SOI object will be public or not.

Since SOI objects have relevance and have multiple relationships and each relationship has different public setting as described above, there is an advantage in that a different search result is derived for each search condition. A public attribute management unit is designated by taking the search conditions into consideration. As the public attribute management units (e.g., a category and a theme) are diversified, further subdivided information public setting is possible and a search result into which an intention of an owner has been incorporated can be outputted. Furthermore, in general, since the public setting of an owner is performed from viewpoints of needs satisfied by searchers and increased efficiency of target advertisements, the SOI search dictionary of the present invention can take an intention of an owner into consideration and also satisfy the needs of searchers.

The setting of public information on an SOI relationship object is performed separately from the setting of public information on an SOI object, and the public information on an SOI relationship object and the public information on an SOI object can be set and changed by an owner. The setting of public information is described in more detail with reference to FIG. 8.

When the SOI dictionary unit 110 matches a place-name ID to an SOI ID for an SOI object and sets public information on the SOI object as described above, the matching information of the SOI object can be stored in the SOI storage unit 120, and the public information on the SOI object can be stored in the public information storage unit 125.

The SOI information generator 130 can register new SOI information or can correct SOI information if the SOI information is changed and store the corrected SOI information in the SOI storage unit 120 and/or the public information storage unit 125. The registration and change of the SOI information as described above can be performed through an external input, or the SOI information can be corrected by way of correction within the SOI search system. The registration and change of public information according to one embodiment of the present invention can be managed by an owner who owns ownership to a corresponding SOI object.

An operational process when a search is made by the SOI search system of the present embodiment, further including the public information storage unit 125, is described below.

First, the SOI search unit 140 provides the SOI dictionary unit 110 with an external keyword. The input through the SOI search unit 140 can include an input through a keyword input and/or an input according to the selection of a space on a map, for example. In addition to the input of the keyword or space selection, the SOI search unit 140 may also be provided with an input for condition information, such as a category and a theme selected by a searcher, as information necessary to obtain a search result according to the present invention. For example, when a user inputs a keyword 'cherry blossom street', the SOI search unit 140 can search for the input of the keyword 'cherry blossom street' and condition information on the time (e.g., a date), a location, etc. when a search was made and provide the search results to the SOI dictionary unit 110.

In order to provide search results in response to an input, such as a keyword or space selection, the SOI dictionary unit 110 can obtain search results in association with the SOI storage unit 120 and the public information storage unit 125. In one embodiment, the SOI dictionary unit 110 can collect information on a keyword, condition information, etc. that are included in a search input and filter a public range on the basis of the pieces of collected information. For example, if a theme, the time, etc. are specified as information on an inputted keyword and condition information, a space dictionary (i.e., part of a space dictionary previously constructed and stored by the SOI storage unit 120 and the public information storage unit 125) that will be used to obtain search results for the specified theme and time and the keyword can be specified.

The SOI dictionary unit 110 can decide an SOI object and SOI relationship objects that will be outputted as search results according to a specified public range and a search input. That is, the SOI dictionary unit 110 can decide pieces of information which are matched to a search, from among SOI objects and SOI relationship objects stored in the SOI storage unit 120, and which have a public attribute. The decided SOI object and SOI relationship objects can include only an SOI object and SOI relationship objects whose attribute information is set to be public in each public attribute management unit. Here, an SOI object can be decided on the basis of an SOI ID assigned to the SOI object. After deciding an SOI object and SOI relationship objects to be outputted as search results, the SOI dictionary unit 110 can output the search results to the SOI search unit 140 for a subsequent process. For example, the search results may be displayed in the form of a map, may be listed according to the degree of accuracy and provided, or may be transmitted to another processor for a subsequent process. In the aforementioned embodiment, the SOI dictionary unit 110 has been illustrate as integrally performing a function of obtaining search results in response to a search input and a function, such as filtering according to public information, but the functions may be implemented by different processors (e.g., separated elements) depending on their functions.

The SOI search system according to the present embodiment can generate a dictionary by matching SOI objects to place-name IDs and implement public information on the SOI objects and SOI relationship objects so that the public information can be set in a specific unit. Accordingly, there are advantages in that a range of a search can be minimized, a processing load can be reduced, and subdivided search results can be provided because information on a dictionary constructed according to conditions can be selectively used according to an input including a keyword inputted by a searcher and information on the information.

FIG. 8 is diagram showing an example of an SOI dictionary constructed by the SOI search system according to one embodiment of the present invention with reference to the SOI search system described with reference to FIG. 7. FIG. 8(a) illustrates pieces of public information for each public attribute management unit that are stored in the public information storage unit 125, and FIG. 8(b) illustrates pieces of public information on SOI objects and public information on an SOI relationship object.

From FIG. 8(a), it can be seen that pieces of public attribute management unit information include a Theme A, a Theme B, a Category 'Maintenance', a Season 'December∼February', and a Season 'June∼August' shown in a vertical column on the left side of FIG. 8(a). In horizontal rows, information on whether an SOI object is public or private refers to public attribute information on each SOI object for each public attribute management unit. For example, a SOI 1 object in a first vertical row is set to be 'public' for all pieces of public attribute management unit information, whereas a SOI 2 object is set to be private for only the Theme B. Thus, if information collected in response to a search input (including condition information) includes the Theme B, the SOI 2 object is not exposed as a search result.

Meanwhile, a SOI 5 object is set to be private for only a User Group 1 in the case of the Theme B and is set to be private for only a User Group 2 in the case of the Category 'Maintenance'. In this case, if a search input by the User Group 2 includes the Category 'Maintenance', the SOI 5 object is set to be private, but if a search is performed by a User Group 3, the SOI 5 object is set to be public for all the pieces of public attribute management unit information.

As described above, since each piece of public information is individually set depending on a plurality of public attribute management units, the SOI search system constructed according to the present invention is implemented as if it has a plurality of SOI dictionaries for each condition. As a result, optimum search results into which an intention of an owner has been incorporated can be outputted depending on the setting of public information. Furthermore, optimum search results according to the needs of a customer can be outputted because an owner sets public information on an SOI object or an SOI relationship object in order to satisfy the needs of the customer.

Public information on an SOI relationship object is described in more detail below with reference to FIG. 8(b). As described above, in accordance with one embodiment of the present invention, whether an SOI relationship object that couples SOI objects will be public or not can also be set. Referring to FIG. 8(b), a SOI 1 object having an SOI ID 1, a SOI 2 object having an SOI ID 2, and a SOI 3 object having an SOI ID 3 have public information, private information, and public information, respectively. Furthermore, the SOI 1 object and the SOI 2 object have an SOI relationship object R1 therebetween, the SOI 2 object and the SOI 3 object have an SOI relationship object R2 therebetween, and the SOI 1 object and the SOI 3 object have an SOI relationship object R3 therebetween. Each of the SOI relationship objects can include an ID and has space information. FIG. 8(b) illustrates the SOI objects and the SOI relationship objects based on only one public attribute management unit, for convenience of description. However, in view of an SOI object having multiple relationships, one SOI object may have a variety of relationships with a plurality of different SOI objects and two SOI objects may have two or more relationship objects therebetween.

As described above, in accordance with the present invention, public information on an SOI relationship object can be set. Accordingly, a specific relationship between SOI objects can be public or private depending on a public attribute management unit. For example, it is assumed that the SOI 3 object is a higher space object (e.g., a building), the first and the SOI 2 objects are the lower objects (e.g., stores within the building) of the SOI 3 object, and public information on a specific theme has been set as shown in FIG. 8(b). In accordance with the embodiment of FIG. 3 or 6, if a searcher performs a search for the SOI 3 ID, not only both the SOI 1 object and the SOI 2 object, that is, the lower objects, but also a relationship between the lower objects can be public. In FIG. 8(b), however, since the SOI 2 object is set to be private and the relationship object R2 is set to be private in the theme, the SOI 2 object, that is, the lower object, is not derived as a search result although the SOI 3 object is searched for. For example, if the SOI 2 object is an ice cream store, an owner of the SOI 3 object (e.g., an owner who has ownership to the lower object) can set the ice cream store in the private state in a 'Season: Winder' in a public attribute management unit. In this case, there is a high possibility that other lower objects will be displayed at higher locations within a limited page, and a possibility that the ice cream store may be searched for in winter is relatively low. Accordingly, there is an advantage in that a tendency of a searcher not wanting to view the ice cream store as a search result can be taken into consideration. As a result, there are advantages in that if public information on a relationship object is set, only information on a corresponding space that is desired to be public depending on an intention of an owner can be presented and the present invention can be utilized in various ways in addition to the embodiment described with reference to FIG. 8.

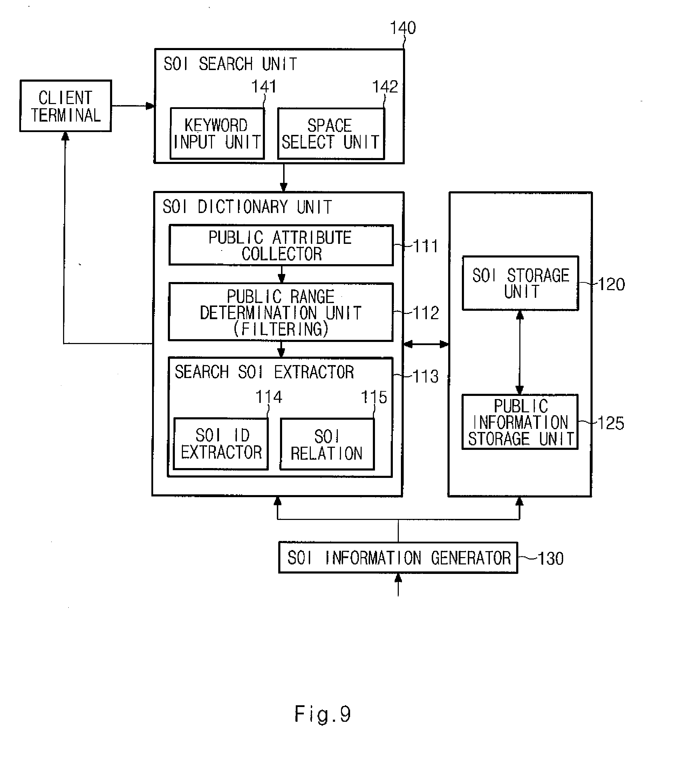

FIG. 9 is a block diagram showing an example of an SOI search system according to an another embodiment of the present invention and this figure is more specified for components of SOI dictionary unit(110). Hereinafter, it is described focused on the process for extracting SOI according to search in SOI dictionary unit. The SOI search system according to the present embodiment includes a public information storage unit 125 together with the SOI search unit 140, the SOI dictionary unit 110, the SOI information generator 130, and the SOI storage unit 120 described with reference to FIG. 7.

Referring to FIG. 9, SOI search unit(140) can include a SOI input unit(141) and a space select unit(142). That is, searching can be performed in the manner that input a specific SOI by the client terminal or choose a certain space. A SOI dictionary unit(110) can include a public attribute collector(111), public range determination unit(112), and a search SOI extractor(113), and the search SOI extractor(113) can include SOI ID extractor(114) and SOI relation selector(115). For example, when a keyword or selection of space is input to the SOI dictionary unit(110) through the SOI search unit(140), public attribute collector(111) can determine a public attribute unit for using SOI dictionary through the SOI storage unit(120) and public information storage unit(125), and collect public attribute information. The collected SOIs are filtered for a public attribute unit of each SOI at the public range determination unit(112) referring to public information storage unit(125). Further, SOI ID extractor(114) can extract SOI ID(i.e., SOI identifier) from the filtered SOIs, and SOI relation selector(115) can extract only public SOIs based on public information for SOI relation. SOI dictionary unit(110) can determine SOI objects and SOI relation objects to be output as search results, and then the results can be ouput to SOI search unit for subsequent process.

Those skilled in the art will appreciate that the present invention can be carried out in other specific ways than those set forth herein without departing from the spirit and essential characteristics of the present invention. The above exemplary embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein. Also, it is obvious to those skilled in the art that claims that are not explicitly cited in the appended claims can be presented in combination as an exemplary embodiment of the present invention or included as a new claim by a subsequent amendment after the application is filed.

As is apparent from the above description, the SOI search system according to one embodiment of the present invention supplements the conventional system that provides location-based data using a keyword database (DB) including a variety of keywords, such that the above-mentioned SOI search system can provide SOI information using a geographical identifier (ID) capable of substituting for a keyword, or can also provide SOI information by matching the keyword-based search result to the geographical ID. Therefore, the SOI search system according to one embodiment of the present invention can simplify the search process for providing location-based data, and at the same time can provide a user with a desired search result.

The SOI search system according to another embodiment of the present invention matches a plurality of geographical IDs to a plurality of SOI IDs, and provides the SOI information based on the matching result. As a result, the SOI search system minimizes a time needed for providing a variety of SOI information, and increases accuracy of location-based data provision.

The SOI search system according to another embodiment of the present invention can set information on whether an SOI object and a relationship between the SOI object and other SOI objects will be public or not depending on ownership to the SOI object by assigning an owner to have a right to set the SOI object in a public state and also construct an SOI dictionary into which a public intention of an owner has been incorporated.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A space of interest (SOI) search system, comprising:
an SOI search unit configured to receiver at least one of a keyword input and a space selection input from a client terminal;
an SOI dictionary unit configured to match one or more SOI objects to one or more place-name IDs based on a geographical location and to set public information on each of the one or more SOI objects and public information on each of SOI relationship objects indicative of relationships between the one or more SOI objects depending on ownership to the one or more SOI objects;
an SOI storage unit configured to store the matched place-name IDs and SOI information objects; and
a public information storage unit configured to store the pieces of public information set to the one or more SOI objects and the SOI relationship objects,
wherein the SOI dictionary unit obtains a search result, corresponding to the input received from the SOI search unit, based on the matching information stored in the SOI storage unit and the pieces of public information stored in the public information storage unit.

2. The SOI search system according to claim 1, wherein:
the public information comprises public attribute information and public attribute management unit information,
the public attribute information comprises one of public and private attributes, and
only an SOI object or SOI relationship object having the public attribute information set to be public is retrieved as the search result.

3. The SOI search system according to claim 2, wherein:
the public attribute management unit information comprises at least one of a theme, a category, a user group, and a season, and
an attribute value of the public attribute information is stored in each public attribute management unit.

4. The SOI search system according to claim 1, wherein the SOI dictionary unit obtains the search result by filtering the SOI objects or the SOI relationship objects based on the public information on the one or more SOI objects and the public information on the SOI relationship objects and deciding an SOI object and SOI relationship objects matched to the received input, from among the filtered SOI objects and the SOI relationship objects.

5. The SOI search system according to claim 4, wherein the SOI dictionary unit uses an SOI search identifier (ID) when deciding the SOI ID object matched to the received input.

6. The SOI search system according to claim 1, wherein the SOI object, the SOI relationship object, and the public information are managed for every user.

7. The SOI search system according to claim 1, further comprising a display unit configured to display SOI information as the search result.

8. A space of interest (SOI) search method, comprising:
matching one or more SOI objects to one or more place-name identifiers (IDs) based on a geographical location and storing the matched SOI objects and place-name IDs;
setting public information each of the one or more SOI objects and public information on each of SOI relationship objects indicative of relationships between and the one or more SOI objects depending on ownership to the one or more SOI objects;
receiving at least one of a keyword input and a space selection input from a client terminal; and
obtaining a search result corresponding to the received input based on information on the matched SOI objects and place-name IDs stored in the SOI storing step and the pieces of public information set in the public information setting step.

9. The SOI search method according to claim 8, wherein:
the public information comprises public attribute information and public attribute management unit information,
the public attribute information comprises one of public and private attributes, and
only an SOI object or SOI relationship object having the public attribute information set to be public is retrieved as the search result.

10. The SOI search method according to claim 9, wherein:
the public attribute management unit information comprises at least one of a theme, a category, a user group, and a season, and
an attribute value of the public attribute information is stored in each public attribute management unit.

11. The SOI search method according to claim 8, wherein obtaining the search result comprises:
filtering the SOI objects or the SOI relationship objects based on the public information on the one or more SOI objects and the public information on the SOI relationship objects; and
deciding an SOI object and SOI relationship objects matched to the received input, from among the filtered SOI objects and the SOI relationship objects.

12. The SOI search method according to claim 11, wherein obtaining the search result comprises using an SOI search identifier (ID) when deciding the SOI ID object matched to the received input.

13. The SOI search method according to claim 8, wherein the SOI object, the SOI relationship object, and the public information are managed for every user.

14. The SOI search method according to claim 8, further comprising a display unit configured to display SOI information as the search result.
